# DEMANDE DE BREVET EUROPEEN

(11) **EP 1 453 237 A1**
(43) Date de publication de la demande: **01.09.2004**
(21) Numéro de dépôt: 04290486.2
(22) Date de dépôt: 16.02.2004
(51) Int. Cl.: H04J 14/02

(54) **Procédé d'attribution de fréquences porteuses dans un réseau de transmission optique**

(30) Priorité: 28.02.2003 FR 0302444
(71) Demandeur: ALCATEL, 75008 Paris (FR)
(72) Inventeur: Penninckx, Denis, 91620 Nozay (FR); Charlet, Gabriel, 91190 Villiers-le-Bacle (FR); Noirie, Ludovic, 91620 Nozay (FR)
(74) Mandataire: Chaffraix, Sylvain

(57) **Abrégé**

Pour optimiser les ressources d'un réseau de transmission utilisant le multiplexage par répartition de fréquences optiques, l'attribution des fréquences porteuses aux signaux à transmettre consiste :
- à associer N ensembles (E1-E4) de fréquences d'un peigne respectivement à N plages (P1-P4) de valeurs consécutives de taux d'erreurs, les fréquences d'un ensemble assurant un taux d'erreurs moyen (MER) compris dans la plage associée,
- à définir un niveau (VC) de contrainte de transmission des signaux, pouvant prendre une valeur parmi N valeurs distinctes (VC1-VCN),
- à associer ces N valeurs de contrainte prises par ordre croissant aux N ensembles de fréquences pris par ordre décroissant des taux d'erreurs des N plages associées,
- à attribuer à tout signal à transmettre (S1-Sn) une fréquence porteuse appartenant à un des ensembles qui est associé à une valeur de contrainte au moins égal à la valeur de contrainte affectée audit signal.

## Description

L'invention se situe dans le domaine des réseaux de transmission optique et plus précisément des réseaux utilisant le multiplexage en longueur d'onde. Elle concerne principalement un procédé pour attribuer aux signaux à transmettre des fréquences porteuses utilisables dans un tel réseau.

Il est rappelé que les réseaux optiques sont essentiellement constitués de noeuds reliés entre eux par des liaisons optiques. Un noeud est souvent relié à plusieurs autres noeuds et intègre alors des fonctions de routage pour aiguiller sélectivement les signaux reçus de liaisons amont vers d'autres liaisons aval en fonction des destinations respectives des signaux. Certains noeuds ont des fonctions d'accès permettant l'introduction de signaux dans le réseau et/ou l'extraction de signaux à partir du réseau.

Dans les réseaux mettant en oeuvre le multiplexage en longueur d'onde, habituellement désigné par WDM (de l'anglais "Wavelength Division Multiplexing"), ou encore appelé "multiplexage par répartition de fréquences optiques", les signaux véhiculés dans les liaisons sont des signaux multiplex WDM constitués de plusieurs composantes portées respectivement par des fréquences optiques distinctes. Un signal multiplex WDM est donc formé d'une combinaison de signaux optiques constitués chacun d'une onde porteuse optique modulée en fonction de l'information à émettre. Chaque fréquence optique (ou la longueur d'onde correspondante) d'une onde porteuse définit ainsi un canal WDM correspondant. Dans la suite de l'exposé, nous désignerons les canaux indifféremment par leurs fréquences optique f ou par leurs longueurs d'onde λ, sachant que ces deux grandeurs sont liées par la relation f = c/λ, où c est la vitesse de la lumière dans le vide.

Dans le cas des réseaux WDM, et selon une première possibilité, les noeuds peuvent être équipés de dispositifs de régénération agissant séparément sur chaque canal des multiplex WDM reçus pour effectuer une remise en forme et une resynchronisation. Le réseau qui est alors dit "opaque" présente l'avantage de pouvoir assurer une qualité minimale de transmission fixée pour tous les itinéraires susceptibles d'être suivis par les différents canaux. En contrepartie, la présence des régénérateurs a une incidence sur le coût du réseau qui est d'autant plus importante que le nombre de canaux WDM est élevé.

Une autre solution moins coûteuse consiste à concevoir un réseau démuni de dispositifs de régénération individuelle des canaux. Un tel réseau qui est alors dit "transparent" peut toutefois comporter des amplificateurs optiques disposés pour amplifier simultanément les canaux des multiplex WDM transmis. Un compromis peut aussi consister à réaliser un réseau mixte où certaines liaisons seulement sont munies de régénérateurs.

Dans un réseau transparent (ou dans la partie transparente d'un réseau mixte), les liaisons entre deux noeuds, directes ou indirectes par l'intermédiaire d'autres noeuds, sont elles-mêmes transparentes et doivent être en moyenne plus courtes que dans un réseau opaque car, malgré la présence éventuelle d'amplificateurs, les dégradations des signaux augmentent avec la distance de transmission. Un réseau transparent offre par conséquent moins de souplesse de conception et d'utilisation.

Par ailleurs, il a été observé que la qualité de transmission d'un signal optique est notamment dépendante de la fréquence optique de l'onde portant le signal.

Par exemple, dans la bande dite C couvrant les longueurs d'onde comprises entre 1530 et 1560 nm, on observe que les basses longueurs d'onde sont moins "efficaces", c'est-à-dire permettent des qualités de transmission qui sont inférieures en moyenne à celles observées avec des longueurs d'onde plus élevées. En effet, aux basses longueurs d'onde, notamment les pertes dans les fibres sont plus élevées, le bruit introduit par les amplificateurs classiques est plus important et les effets non linéaires sont renforcés.

Tant qu'on utilise dans un réseau transparent des fréquences porteuses appartenant à une bande de fréquences relativement étroites, ce phénomène reste marginal. Mais il n'est pas sans conséquences dès lors que la bande de fréquences utilisables devient de plus en plus large.

Pour tenir compte de ce phénomène, le plus simple consiste à dimensionner le réseau (longueurs des liaisons, gains des amplificateurs) en fonction des fréquences porteuses les moins efficaces. Mais cela signifie que le réseau est surdimensionné à l'égard des autres fréquences.

On peut aussi imaginer diverses mesures de compensation telles que l'utilisation d'amplificateurs spécifiques à gain renforcé aux basses longueurs d'onde ou une gestion de la dispersion chromatique visant à égaliser les performances de transmission des différentes longueurs d'onde de la bande utilisée. Ces solutions entraînent toutefois un surcoût ou une utilisation des ressources du réseau qui n'est pas optimale.

Aussi l'invention a pour but d'améliorer l'utilisation des ressources d'un réseau de type transparent ou du moins partiellement transparent.

En analysant plus en détail les conditions d'exploitation des réseaux transparents, il ressort aussi que les signaux à transmettre n'imposent pas des contraintes de transmission uniformes. Par exemple, la distance de transmission sans régénération varie d'un signal à l'autre selon la destination du signal et l'itinéraire choisi pour l'atteindre. De même, dans certains réseaux il peut y avoir plusieurs débits de transmission selon les signaux considérés. Ou encore, on peut prévoir différentes classes de service attribuables aux signaux, ces classes imposant respectivement différentes valeurs maximales admissibles de taux d'erreurs entachant les signaux reçus après transmission.

Ainsi, dans un réseau transparent, on observe d'une part que les contraintes de transmission sont variables en fonction des signaux, et d'autre part que la qualité de transmission d'un signal optique est dépendante de la fréquence de l'onde porteuse. Au lieu de chercher à compenser les différences d'efficacité des ondes porteuses selon leurs fréquences, l'invention vise une autre approche plus économique qui consisterait au contraire à mettre en adéquation les efficacités différentes des fréquences porteuses aux contraintes différentes des signaux à transmettre, c'est-à-dire à établir une règle pour attribuer les fréquences les plus efficaces aux signaux les plus contraignants, et réciproquement.

Une telle règle d'attribution peut être élaborée si on peut définir au préalable d'une part une mesure de l'efficacité des fréquences et d'autre part une mesure du caractère "contraignant" des signaux. Pour définir ces notions, il convient de pouvoir les rattacher à des paramètres mesurables intervenant dans les transmissions par des liaisons transparentes.

Un paramètre déterminant est la qualité d'une transmission d'un signal qui est directement mesurable par une détermination du taux d'erreurs que présente un signal reçu après transmission. Cette qualité est conditionnée d'une part par des paramètres physiques liés à la liaison tels que sa longueur, le type de fibre utilisée, les caractéristiques des amplificateurs. Elle dépend d'autre part de paramètres liés aux propriétés physiques du signal. Ces propriétés physiques sont conditionnées par le spectre du signal, donc par sa fréquence porteuse et son débit comme déjà mentionné, mais aussi par son format de modulation. La qualité de transmission d'un signal dépend aussi de son environnement, c'est-à-dire de la présence et de la nature d'autres signaux portés par des fréquences voisines et transmis simultanément.

Concernant l'efficacité d'une fréquence donnée, elle peut être évaluée à partir de la moyenne des valeurs de taux d'erreurs que présentent dans le réseau considéré les signaux reçus après transmissions et portés par cette fréquence.

Quant au caractère contraignant d'un signal, il peut être la résultante de plusieurs paramètres liés à chaque signal à transmettre et que nous désignerons dans la suite par "paramètres de contrainte de transmission". La distance de transmission, le débit, la valeur maximale de taux d'erreurs sont des exemples de tels paramètres. Cette résultante, appelée "niveau de contrainte", sera donc une fonction des divers paramètres de contrainte de transmission pouvant être attribués à un signal.

Après avoir défini l'efficacité d'une fréquence et la fonction permettant d'évaluer les niveaux de contrainte des signaux, il devient possible d'établir une correspondance biunivoque entre chaque fréquence et un niveau de contrainte que cette fréquence pourrait assumer. Mais en pratique pour autoriser une certaine flexibilité dans l'attribution à tout signal d'une fréquence adaptée, il convient de constituer un nombre limité prédéfini N de classes ou ensembles de fréquences tels que chaque classe regroupe les fréquences dont les efficacités se situent dans une plage de valeurs données, donc dont les valeurs de taux d'erreurs moyens se situent aussi dans une plage de valeurs données. La fonction des paramètres de contrainte mentionnée ci-dessus peut donc être considérée comme une fonction étagée pouvant prendre N valeurs distinctes, dites valeurs de contrainte, qui seront alors associées aux N ensembles de fréquences.

Les considérations précédentes vont alors permettre de définir plus précisément le procédé selon l'invention pour attribuer les fréquences porteuses aux signaux.

En résumé, l'invention a pour objet un procédé pour attribuer des fréquences optiques porteuses à des signaux à transmettre dans un réseau de transmission optique utilisant le multiplexage par répartition de fréquences optiques, lesdites fréquences appartenant à un peigne de fréquences optiques, les signaux reçus après transmissions dans ledit réseau et portés par une fréquence porteuse donnée présentant un taux d'erreurs moyen qui dépend de ladite fréquence porteuse donnée, un ou plusieurs paramètre(s) de contrainte de transmission étant associé(s) à tout signal à transmettre, caractérisé en ce qu'il consiste :
- à associer N ensembles de fréquences optiques du peigne respectivement à N plages de valeurs consécutives de taux d'erreurs, chacun de ces ensembles étant constitué de fréquences assurant un taux d'erreurs moyen compris dans la plage associée,
- à définir une mesure de niveau de contrainte de transmission des signaux, cette mesure étant fonction dudit ou desdits paramètre(s) de contrainte de transmission et pouvant prendre N valeurs distinctes, dites valeurs de contrainte,
- à associer ces N valeurs de contrainte prises par ordre croissant respectivement auxdits N ensembles de fréquences pris par ordre décroissant des valeurs de taux d'erreurs des N plages associées,
- à affecter à tout signal à transmettre une valeur de contrainte obtenue en appliquant ladite mesure,
- à attribuer audit signal à transmettre une fréquence porteuse appartenant à un desdits ensembles de fréquences qui est associé à une valeur de contrainte au moins égal à la valeur de contrainte affectée audit signal à transmettre.

Un des paramètres de contrainte peut être une valeur de distance de transmission que doit parcourir le signal sans bénéficier d'une régénération individuelle. Un autre paramètre peut être une valeur minimale de débit de transmission du signal, ou bien une valeur maximale de taux d'erreurs imposée en réception du signal après sa transmission.

L'invention a aussi pour objet un réseau de transmission optique utilisant le multiplexage par répartition de fréquences optiques pour transmettre des signaux portés respectivement par des fréquences optiques porteuses appartenant à un peigne de fréquences optiques, caractérisé en ce qu'il comporte des moyens de traitement aptes à attribuer des fréquences optiques porteuses aux signaux à transmettre conformément au procédé selon l'invention.

D'autres aspects et avantages de l'invention apparaîtront dans la suite de la description en référence aux figures.
- La figure 1 représente schématiquement un exemple de réseau transparent selon l'invention.
- La figure 2 représente un exemple de spectre d'un multiplex WDM observable en sortie d'un amplificateur optique.
- Les figures 3 et 4 sont des exemples de courbes représentant les variations du taux d'erreurs moyen en fonction de la longueur d'onde, respectivement pour deux peignes de fréquences différents utilisés pour constituer un multiplex.
- La figure 5 est un organigramme où sont représentées les principales étapes impliquées pour l'attribution des fréquences conformément au procédé selon l'invention.

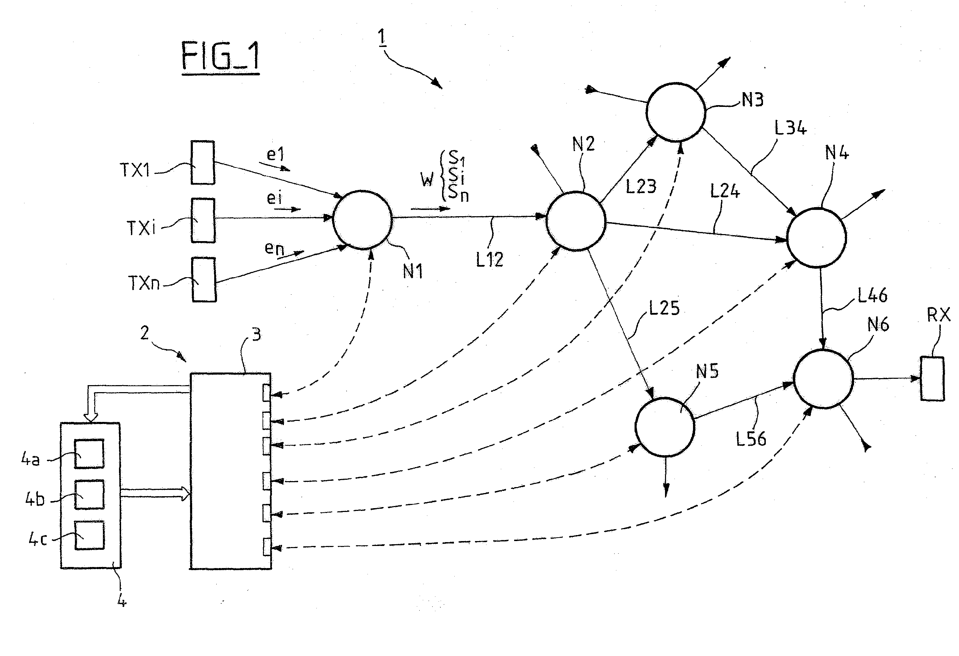

Pour illustrer l'invention, la figure 1 montre une partie d'un réseau transparent 1 de type classique qui comporte une pluralité de noeuds N1 à N6 ainsi que des liaisons optiques entre noeuds L12, L23, ..., L56. Une liaison peut comporter un seul tronçon de fibre optique ou plusieurs tronçons couplés entre eux par l'intermédiaire d'amplificateurs optiques.

Selon l'exemple représenté, le noeud N1 est un noeud d'accès au réseau qui communique avec des terminaux émetteurs TX1,..., TXi, ..., TXn. Le noeud N6 est également un noeud d'accès qui communique avec des terminaux récepteurs tels que RX.

Les noeuds du coeur du réseau N2 à N5 sont munis de commutateurs optiques spectraux et spatiaux aptes à aiguiller sélectivement les signaux reçus de noeuds amont vers des noeuds aval. Par exemple, le noeud N2 qui reçoit du noeud N1 un multiplex W peut coupler chacune de ses composantes spectrales S1, Si, Sn sélectivement vers l'une des liaisons L23, L24, L25 en direction respectivement des noeuds N3, N4, N5.

Dans l'exemple représenté, le réseau est géré de façon centralisée par un contrôleur de réseau 2. Le contrôleur 2 est essentiellement constitué d'une unité de traitement 3 coopérant avec une mémoire 4. L'unité 3 peut communiquer avec les noeuds au moyen de liaisons de contrôle symbolisées par des lignes en pointillés fléchées. Ces liaisons permettent au contrôleur 2 de recevoir en permanence des noeuds d'accès l'ensemble des requêtes de transmission de signaux dans le réseau et de commander en conséquence les commutateurs des noeuds de façon à imposer à chacun de ces signaux une fois émis de suivre un itinéraire choisi en fonction de données relatives à la topologie du réseau et à l'ensemble des requêtes. Ces données sont rassemblées sous la forme d'une table de routage 4a contenue dans la mémoire 4.

Par exemple, si des signaux e1, ei, en issus des terminaux émetteurs TX1, TXi, TXn doivent être transmis à des terminaux récepteurs respectifs tel que RX, le noeud d'accès N1 devra les convertir sous la forme de signaux optiques S1, Si, Sn et élaborer un multiplex W les comportant. Auparavant, le noeud N1 émet vers le contrôleur 2 une requête qui contient des informations relatives au signaux, et en particulier leurs destinations. En fonction de cette requête et compte tenu d'éventuelles autres requêtes provenant d'autres noeuds d'accès, le contrôleur 2 pilote les commutateurs des noeuds à travers lesquels notamment les signaux optiques S1, Si, Sn du multiplex W devront transiter de façon à ménager des liaisons optiques ininterrompues entre le noeud N1 et les noeuds d'accès aux terminaux récepteurs respectifs. Dans cet exemple, on voit que pour accéder au terminal récepteur RX plusieurs itinéraires sont possibles : N1-N2-N3-N4-N6, ou N1-N2-N4-N6, ou N1-N2-N5-N6.

Jusqu'ici, tous les éléments du réseau mentionnés sont de type classique et ne nécessitent donc pas d'être développés plus en détail.

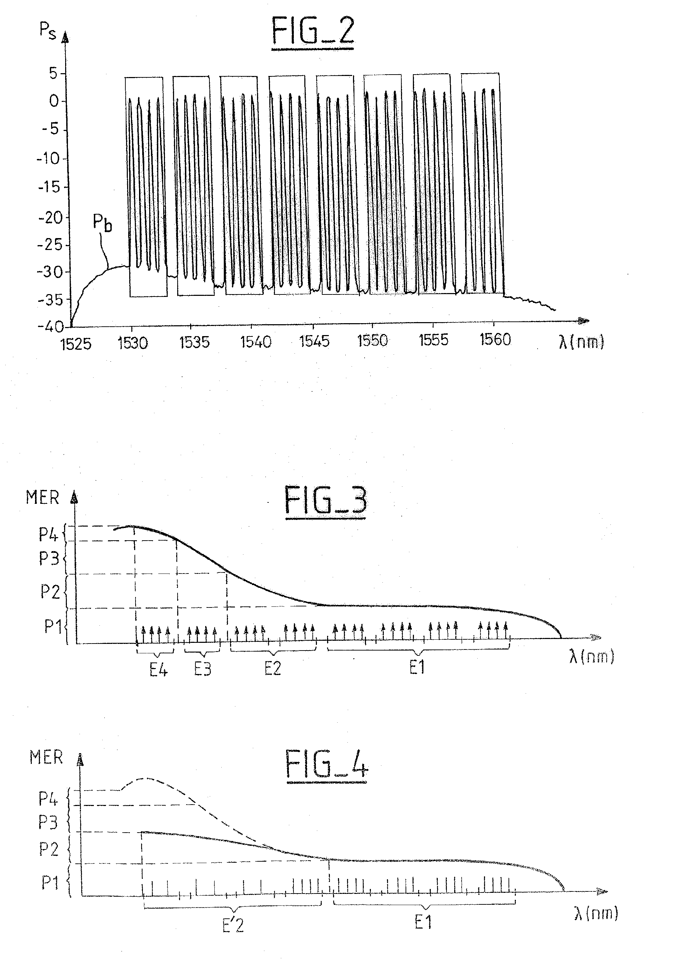

La mise en oeuvre du procédé selon l'invention va maintenant être exposée à l'aide d'abord des figures 2 à 4 illustrant l'exemple d'un réseau conçu pour supporter les fréquences porteuses de la bande C couvrant les longueurs d'onde comprises entre 1530 et 1560 nm.

On a pris le cas particulier où les fréquences porteuses des canaux appartiennent à une grille standard de fréquences dont le pas, c'est-à-dire l'écart entre les fréquences de deux canaux voisins, vaux 100 GHz (correspondant à un écart entre les longueurs d'onde d'environ 0,8 nm). L'exemple s'applique en outre à un réseau utilisant la commutation de bandes, où pour faciliter les opérations de démultiplexage par bandes, les fréquences porteuses utilisables sont celles qui appartiennent à un peigne organisé en 8 bandes de 4 fréquences, deux bandes adjacentes étant espacées d'un largeur spectrale égale à deux pas de la grille.

La figure 2 montre la courbe représentative du spectre d'un signal WDM utilisant le peigne indiqué ci-dessus, tel qu'on peut l'observer en sortie d'un amplificateur d'émission usuel. Ce spectre exprime ici les variations de la densité spectrale de puissance Ps exprimée en dB en fonction de la longueur d'onde λ exprimée en nm.

La figure fait apparaître des raies correspondant aux fréquences porteuses et montre qu'elles prennent naissance à partir d'une courbe Pb correspondant au bruit produit par l'amplificateur. D'après la forme du spectre, on peut constater que le rapport signal à bruit des canaux transmis augmente avec la longueur d'onde, ce qui permet d'en déduire qu'en réception après une transmission dans des conditions données les signaux portés par les basses longueurs d'onde présenterons un taux d'erreurs supérieur à ceux des signaux portés par des longueurs d'onde plus élevées. Cet exemple démontre que les fréquences porteuses n'ont pas des efficacités identiques.

Plus généralement, on pourra établir pour un réseau donné et pour chaque fréquence d'un peigne donné la moyenne des valeurs de taux d'erreurs, dit "taux d'erreurs moyen" MER, que présentent les signaux reçus après transmissions dans le réseau et portés par cette fréquence. Cette moyenne peut être estimée expérimentalement par une méthode statistique prenant en compte des mesures de taux d'erreurs de signaux de test portés par chaque fréquence et transmis par diverses liaisons et itinéraires prédéfinis du réseau.

Cette évaluation permettra alors de définir la relation entre le taux d'erreurs moyen MER et la fréquence porteuse (ou la longueur d'onde).

La figure 3 montre dans le cas du peigne précédent un exemple de courbe représentative d'une telle relation. La courbe représente les variations du taux d'erreurs moyen MER en fonction de la longueur d'onde λ exprimée en nm, les longueurs d'onde du peigne étant symbolisées par des flèches verticales disposées le long de l'axe des longueurs d'onde.

Selon l'invention, en choisissant alors plusieurs plages de valeurs consécutives de taux d'erreurs, on constitue autant d'ensembles de fréquences optiques du peigne tels que chacun de ces ensembles soit constitué de fréquences appartenant à une même gamme de performance, c'est-à-dire qui assurent un taux d'erreurs moyen MER compris dans la plage associée.

Ainsi, dans l'exemple représenté par la figure 3, on a choisi quatre plages de valeurs croissantes de taux d'erreurs P1, P2, P3 et P4 qui permettent de définir quatre ensembles de fréquences E1, E2, E3 et E4 qui regroupent respectivement 16, 8, 4 et 4 fréquences du peigne décrit précédemment.

Il est à noter que le résultat obtenu dépend généralement du peigne de fréquences utilisé car le taux d'erreurs moyen MER d'une fréquence porteuse peut être influencé par la présence des autres fréquences porteuses dans le même multiplex. Cela est dû aux interactions possibles entre canaux voisins causés par des phénomènes non linéaires tels que le "mélange à quatre ondes" ("FWM", de l'anglais "four-waves mixing") ou la modulation de gain croisée ("cross gain modulation" en anglais). Les diaphonies qui en résultent sont d'autant plus pénalisantes que les puissances optiques sont élevées et que l'espacement spectral entre les canaux est réduit.

Ce phénomène est illustré par la figure 4 dans le cas d'un peigne différent du précédent, dont les longueurs d'onde, toujours symbolisées par des flèches verticales, sont plus espacées pour les basses longueurs d'onde. On obtient alors une courbe (en trait plein) représentant les variations du taux d'erreurs moyen MER en fonction de la longueur d'onde λ qui diffère de la courbe précédente (en pointillés) : le taux d'erreurs moyen des basses longueurs d'onde est amélioré.

Ainsi, en prenant les mêmes plages de valeurs de taux d'erreurs P1 à P4 que précédemment, on n'obtient plus que deux ensembles de fréquences non vides E1 et E'2. L'ensemble E1 associé à la plage P1 est inchangé. Par contre la plage P2 est associée à un nouvel ensemble E'2 comportant 10 fréquences.

On pourra donc définir pour chaque peigne envisageable N ensembles de fréquences, le nombre N étant bien sûr fonction du peigne considéré et des plages de valeurs de taux d'erreurs qui ont été choisies. Les informations identifiant pour le ou les peigne(s) choisi(s) les fréquences des différents ensembles sont alors stockées dans la mémoire 4 du contrôleur 2 sous la forme d'une table correspondante 4c.

Pour optimiser conformément à l'invention l'utilisation du réseau, ces N ensembles pris par ordre décroissant des valeurs de taux d'erreurs des N plages associées vont alors correspondre respectivement à N valeurs distinctes pouvant être prises par le niveau de contrainte des signaux. Le cas le plus simple de mise en oeuvre de l'invention est celui correspondant à la figure 4 où on ne prévoit que deux ensembles de fréquences (N = 2), donc seulement deux valeurs de contrainte distinctes. Le procédé consistera alors simplement à attribuer aux signaux dont la valeurs de contrainte est haute exclusivement des fréquences de l'ensemble E1 associé à la plage P1 des plus faibles taux d'erreurs. Les signaux dont la valeur de contrainte est basse se verront attribuer en priorité des fréquences de l'ensemble E'2 associé à la plage P2 des plus forts taux d'erreurs, sans exclure la possibilité de leur attribuer des fréquences de l'autre ensemble.

D'une façon générale, un niveau de contrainte VC est représentatif d'un niveau de performance minimal imposé à la transmission d'un signal. Selon le réseau considéré, le niveau de contrainte d'un signal peut dépendre de divers paramètres de contrainte qui contribuent chacun à élever ce niveau de performance minimal.

Un cas simple est celui où le débit et un taux d'erreurs maximal imposé sont les mêmes pour tous les signaux. Le niveau de contrainte VC est alors essentiellement fonction de la distance de transmission qui en pratique peut donc constituer le seul paramètre de contrainte à prendre en compte. En reprenant l'exemple précédent de la figure 4, la règle d'attribution des fréquences revient simplement à fixer une valeur limite de distance de transmission et à attribuer aux signaux à transmettre sur une distance supérieure ou égale à cette valeur limite une des longueurs d'onde de l'ensemble E1 exclusivement, et à attribuer aux signaux à transmettre sur une distance inférieure à cette valeur limite une des longueurs d'onde de l'ensemble E'2 ou éventuellement E1. La valeur limite de distance est une valeur de distance intermédiaire entre les distances de transmission minimale et maximale possibles dans le réseau. Elle pourrait être choisie de façon approximative ou si possible expérimentalement pour qu'elle constitue une valeur optimale statistiquement.

Si en plus le réseau est utilisé pour transmettre des signaux ayant des débits différents, le débit sera un autre paramètre de contrainte. Ceci conduit à définir une fonction G de la distance de transmission et du débit, et permettant d'évaluer un niveau de contrainte résultant VC. Cette fonction peut prendre N valeurs correspondant aux N valeurs de contrainte et être définie expérimentalement de sorte que chaque fréquence appartenant à celui des N ensembles de fréquences qui est associé à une de ces valeurs contrainte permette à tout signal ayant cette même valeur de contrainte et porté par cette fréquence d'être transmis sur la distance de transmission imposée, avec son débit imposé et avec un taux d'erreurs au plus égal au taux maximal imposé.

On peut identifier d'autres paramètres qui dépendent d'options fonctionnelles prévues dans le réseau. Notamment, si les signaux peuvent appartenir à différentes classes de service imposant différentes valeurs maximales admissibles de taux d'erreurs en réception, cette classe de service ou ce taux d'erreurs maximal constitue aussi un paramètre de contrainte à prendre en compte dans la définition de la fonction G.

Les N valeurs que peut prendre la fonction G correspondent donc respectivement aux N valeurs de contrainte distinctes VC1-VCN qui, prises par ordre croissant, correspondent respectivement aux N ensembles de fréquences pris par ordre décroissant des valeurs de taux d'erreurs des N plages associées.

Cette fonction G peut pendre simplement la forme d'une table 4b stockées dans la mémoire 4 du contrôleur 2 et adressable en fonction des paramètres de contrainte à prendre en compte. A chaque adresse correspond alors une donnée représentative d'une valeur de contrainte correspondante VC.

On peut aussi créer la fonction G à partir d'une fonction analytique à une ou plusieurs variables, comme par exemple une fonction polynomiale, les N valeurs que peut prendre la fonction G étant des valeurs d'arrondis de la fonction analytique. Avec les paramètres de contrainte cités ci-dessus, cette fonction analytique sera une fonction croissante de la distance et du débit et décroissante de la valeur maximale de taux d'erreurs admissible.

En résumé, dans le cas général, l'attribution des fréquences optiques porteuses aux signaux à transmettre consistera alors :
- à affecter à tout signal à transmettre une valeur de contrainte obtenue en appliquant la fonction G au(x) paramètre(s) de contrainte du signal,
- à attribuer à ce signal une des fréquences porteuses appartenant à un des ensembles de fréquences qui est associé à une valeur de contrainte au moins égal à la valeur de contrainte affectée à ce signal à transmettre.

La mise en oeuvre pratique du procédé selon l'invention se fera au moyen d'un programme approprié exécutable par l'unité de traitement 3, ce programme utilisant en particulier la table 4c où sont identifiées pour chaque noeud d'accès les fréquences de chacun des N ensembles, et la fonction G matérialisée par exemple par la table 4b.

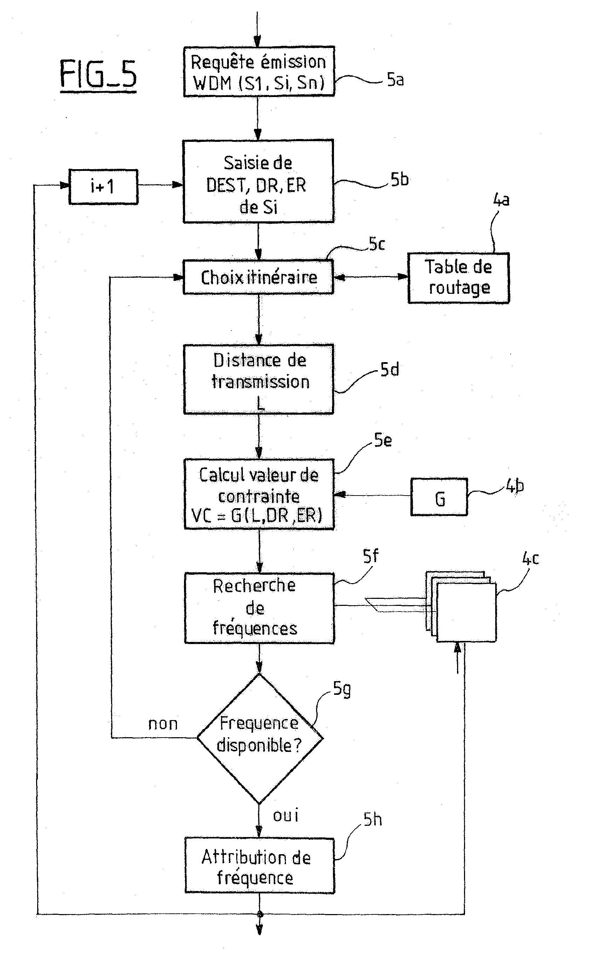

Les principales étapes d'un exemple d'algorithme de programme sont représentées à la figure 5 sous la forme d'un organigramme. Dans cet exemple, les paramètres de contrainte d'un signal sont sa distance de transmission L, son débit DR et la valeur maximale ER de taux d'erreurs correspondant à sa classe de service.

Il est supposé qu'un peigne de fréquences utilisables dans le réseau a été défini et que l'unité a mis à jour la table de routage 4a en fonction de l'ensemble des requêtes reçues du réseau.

Pour chaque noeud d'accès ayant émis une requête d'émission WDM, le processus d'attribution des fréquences pour cette requête débute à l'étape 5a par la prise en compte des informations utiles relatives respectivement aux signaux individuels S1, Si, Sn devant constituer le multiplex.

Pour chaque signal Si, de ces informations l'étape 5b extrait celles qui permettent de déterminer les paramètres de contrainte : sa destination DEST, son débit DR, sa classe de service donc sa valeur maximale ER de taux d'erreurs. Le débit DR et la valeur maximale ER de taux d'erreurs constituent directement des paramètres de contrainte.

La distance de transmission L est déterminée à l'étape 5d après que l'étape 5c a choisi un itinéraire pour la destination DEST, en fonction des données contenues dans la table de routage 4a.

L'étape 5e consiste à déterminer à l'aide de la fonction G le niveau de contrainte VC = G(L, DR, ER) du signal Si. Le niveau obtenue est une des N valeurs de contrainte VC1-VCN possibles qui permet à l'étape 5f de déterminer grâce à la table 4c les fréquences attribuables au signal Si, c'est-à-dire les fréquences de l'ensemble associé soit à la valeur de contrainte obtenue, soit à un des ensembles associés à des valeurs de contrainte supérieures à celle-ci.

L'étape 5g vérifie s'il existe au moins une fréquence attribuable disponible. Dans l'affirmative, l'étape 5h attribue une de ces fréquences au signal Si. La table 4c est alors accédée pour mettre à jour un indicateur associé au noeud d'accès considéré et à la fréquence attribuée signalant que celle-ci n'est plus disponible. Le processus se poursuit par un retour à l'étape 5b pour traiter le cas du signal suivant Si+1.

S'il avait été constaté à l'étape 5g qu'aucune fréquence attribuable n'est disponible, selon une première possibilité, l'émission du signal Si est simplement suspendue dans l'attente d'une requête d'envoi WDM ultérieure. Selon une autre possibilité optionnelle, le processus revient à l'étape 5c pour rechercher un autre itinéraire impliquant une distance de transmission L inférieure.

Après avoir pris en compte tous les signaux à émettre par le noeud d'accès et attribué si possible des fréquences correspondantes, l'unité de traitement 3 en informe le noeud qui peut ensuite constituer le multiplex et procéder à son émission. Le même processus se répète pour chaque noeud d'accès du réseau qui a émis une requête d'émission.

Bien entendu, l'algorithme qui vient d'être présenté peut faire l'objet de nombreuses variantes. Avantageusement, on peut par exemple prévoir la possibilité d'utiliser plusieurs peignes de fréquences et par conséquent plusieurs tables 4c associées. On peut alors exploiter le fait qu'en jouant sur les espacements entre les fréquences, les différentes grilles obtenues offrent des possibilités variables en termes de qualité ou de compacité spectrale. Pour être efficace par rapport à un espacement régulier calé sur une grille de fréquences, un choix d'espacements différents doit être tel qu'une compacité spectrale moindre soit compensée par des performances accrues.

Plus précisément, il convient que si les fréquences du peigne appartiennent à une grille de fréquences optiques spectralement espacées de façon régulière selon un pas donné, les fréquences du peigne soient spectralement espacées de façon irrégulière de sorte que le nombre de fréquences appartenant à au moins un des N ensembles de fréquences associé à une plage de valeurs de taux d'erreurs parmi les plus élevées soit inférieur au nombre de fréquences appartenant à l'ensemble de fréquences associé à cette même plage de valeurs de taux d'erreurs obtenu lorsque les fréquences du peigne sont espacées de façon régulière selon ce pas. En suivant cette règle consistant à augmenter l'espacement des fréquences initialement les moins performantes, on augmentera le nombre de fréquences plus performantes.

Notons enfin que les niveaux VC de contrainte mentionnés précédemment et les N valeurs distinctes VC1-VCN de niveau ne servent qu'à établir une hiérarchie dans l'importance globale des contraintes imposées par les signaux. Les valeurs VC1-VCN ne sont pas nécessairement des valeurs numériques ayant d'autres significations que l'identification d'un rang dans la hiérarchie des contraintes. C'est le cas en particulier si la fonction G est matérialisée par une table 4b adressable en fonction des paramètres de contrainte. Chaque donnée de la table sera simplement représentative d'un rang parmi N permettant de pointer vers une zone de la table 4c contenant l'identité des fréquences de l'ensembles de fréquences correspondant à ce rang.

## Revendications

1. Procédé pour attribuer des fréquences optiques porteuses à des signaux (S1-Sn) à transmettre dans un réseau (1) de transmission optique utilisant le multiplexage par répartition de fréquences optiques, lesdites fréquences appartenant à un peigne de fréquences optiques, les signaux reçus après transmissions dans ledit réseau et portés par une fréquence porteuse donnée présentant un taux d'erreurs moyen (MER) qui dépend de ladite fréquence porteuse donnée, un ou plusieurs paramètre(s) de contrainte de transmission (L, DR, ER) étant associé(s) à tout signal à transmettre, **caractérisé en ce qu'**il consiste :
- à associer N ensembles (E1-E4) de fréquences optiques du peigne respectivement à N plages (P1-P4) de valeurs consécutives de taux d'erreurs, chacun de ces ensembles (E1-E4) étant constitué de fréquences assurant un taux d'erreurs moyen (MER) compris dans la plage associée,
- à définir une mesure de niveau (VC) de contrainte de transmission des signaux, cette mesure étant fonction (G) dudit ou desdits paramètre(s) de contrainte de transmission (L, DR, ER) et pouvant prendre N valeurs distinctes (VC1-VCN), dites valeurs de contrainte,
- à associer ces N valeurs de contrainte (VC1-VCN) prises par ordre croissant respectivement auxdits N ensembles (E1-E4) de fréquences pris par ordre décroissant des valeurs de taux d'erreurs des N plages associées,
- à affecter à tout signal à transmettre (S1-Sn) une valeur de contrainte obtenue en appliquant ladite mesure,
- à attribuer audit signal à transmettre (S1-Sn) une fréquence porteuse appartenant à un desdits ensembles de fréquences qui est associé à une valeur de contrainte au moins égal à la valeur de contrainte affectée audit signal à transmettre.

2. Procédé selon la revendication 1, **caractérisé en ce qu'**un paramètre de contrainte d'un signal est une valeur de distance de transmission que doit parcourir le signal sans bénéficier d'une régénération individuelle.

3. Procédé selon l'une des revendications 1 ou 2, **caractérisé en ce qu'**un paramètre de contrainte d'un signal est une valeur minimale de débit de transmission du signal.

4. Procédé selon l'une des revendications 1 à 3, **caractérisé en ce qu'**un paramètre de contrainte d'un signal est une valeur maximale de taux d'erreurs imposée en réception du signal après sa transmission.

5. Procédé selon l'une des revendications 1 à 4, **caractérisé en ce que** les fréquences du peigne appartenant à une grille de fréquences optiques spectralement espacées de façon régulière selon un pas donné, lesdites fréquences du peigne sont spectralement espacées de façon irrégulière de sorte que le nombre de fréquences appartenant à au moins un desdits N ensembles de fréquences associé à une plage de valeurs de taux d'erreurs parmi les plus élevées soit inférieur au nombre de fréquences appartenant à l'ensemble de fréquences associé à cette même plage de valeurs de taux d'erreurs obtenu lorsque les fréquences du peigne sont espacées de façon régulière selon ledit pas.

6. Procédé selon l'une des revendications 1 à 5, **caractérisé en ce que** ladite mesure est réalisée au moyen d'une table adressable en fonction dudit ou desdits paramètre(s) de contrainte de transmission (L, DR, ER).

7. Procédé selon l'une des revendications 1 à 5, **caractérisé en ce que** ladite mesure est réalisée au moyen d'une fonction analytique dudit ou desdits paramètre(s) de contrainte de transmission (L, DR, ER).

8. Réseau de transmission optique utilisant le multiplexage par répartition de fréquences optiques pour transmettre des signaux (S1-Sn) portés respectivement par des fréquences optiques porteuses appartenant à un peigne de fréquences optiques, **caractérisé en ce qu'**il comporte des moyens de traitement (2) aptes à attribuer des fréquences optiques porteuses aux signaux (S1-Sn) à transmettre conformément au procédé selon l'une des revendications 1 à 7.
